# EUROPEAN PATENT APPLICATION

(11) **EP 3 025 884 A1**
(43) Date of publication of application: **01.06.2016**
(21) Application number: 14829635.3
(22) Date of filing: 09.07.2014
(51) Int. Cl.: B60H 1/22, B60H 1/03, B60H 1/32, F25B 1/00

(54) **VEHICULAR AIR CONDITIONING DEVICE, AND CONSTITUENT UNIT THEREOF**

(30) Priority: 25.07.2013 JP 2013155021
(71) Applicant: Panasonic Intellectual Property Management Co., Ltd., Osaka-shi, Osaka 540-6207 (JP)
(72) Inventor: KURODA, Kentaro, Osaka 540-6207 (JP); TANIGUCHI, Katsuji, Osaka 540-6207 (JP); NODA, Yoshitoshi, Osaka 540-6207 (JP)
(74) Representative: Schwabe - Sandmair - Marx
(86) International application number: PCT/JP2014/003644
(87) International publication number: WO 2015/011887

(57) **Abstract**

Provided is a vehicular air conditioning device which is based on a configuration adopted in a conventional vehicle including a hot-water heater, a heat-pump cooling device, and a control system, and which is capable of increasing heating performance at low cost and with a small increase in installation space. This vehicular air conditioning device is provided with: a first water refrigerant heat exchanger that vaporizes a refrigerant; a second water refrigerant heat exchanger that condenses the refrigerant; and a switching means capable of switching between a state in which the refrigerant flows in a refrigerant circuit including the second water refrigerant heat exchanger, a compressor, and the first water refrigerant heat exchanger, and a state in which the refrigerant flows in another refrigerant circuit including an evaporator, the compressor, and a condenser.

## Description

### Technical Field

The present invention relates to a vehicle air conditioning apparatus and a constituent unit of the vehicle air conditioning apparatus.

### Background Art

Conventionally, as vehicle-heating apparatuses, hot water heaters that heat the vehicle interior with use of engine coolant having a high temperature have been employed. In addition, as conventional vehicle-cooling apparatuses, heat pump cooling apparatuses that cool the air that is sent to the vehicle interior with use of refrigerant having a low temperature of a heat pump have been generally employed.

PTL 1 discloses a vehicle air conditioning apparatus which can improve the heating performance in comparison with existing vehicle air conditioning apparatuses by additionally adopting a configuration in which the coolant of a hot water heater is heated with use of a heat pump while basically using a configuration of an existing hot water heat.

### Citation List

### Patent Literature

PTL 1
Japanese Patent Application Laid-Open No. 10-76837

### Summary of Invention

### Technical Problem

In the vehicle air conditioning apparatus disclosed in PTL 1, the configuration of the heat pump is utilized only for heating, and the vehicle air conditioning apparatus disclosed in PTL 1 is not designed for the operation at the time of cooling. That is, the vehicle air conditioning apparatus disclosed in PTL 1 is not designed for the use of the configuration of the heat pump in common between the heating operation and the cooling operation, or switching between the heating operation and the cooling operation in the case where a cooling function is added to the heating apparatus.

An object of the present invention is to provide a vehicle air conditioning apparatus which can improve heating performance at a low cost and can suppress the increase in installation space relative to the conventional configuration while basically using configurations of a hot water heater and a heat pump cooling apparatus which are employed in conventional vehicles.

### Solution to Problem

A vehicle air conditioning apparatus according to an aspect of the present invention includes: a first water refrigerant heat exchanger that causes heat exchange between refrigerant in a low-temperature and low-pressure state and coolant for heat conveyance to vaporize the refrigerant; a second water refrigerant heat exchanger that causes heat exchange between the refrigerant in a high-temperature and high-pressure state and the coolant to condense the refrigerant; a compressor that compresses the refrigerant; an evaporator that causes heat exchange between the refrigerant in a low-temperature and low-pressure state and sucked air that is sent to an vehicle interior; a condenser that causes heat release from the refrigerant in a high-temperature and high-pressure state to condense the refrigerant; and a switching section capable of switching between a state where the refrigerant flows through a refrigerant circuit including the second water refrigerant heat exchanger, the compressor, and the first water refrigerant heat exchanger, and a state where the refrigerant flows through a refrigerant circuit including the evaporator, the compressor, and the condenser, wherein the first water refrigerant heat exchanger takes in the coolant from a heater core that heats air that is sent to the vehicle interior, and outputs the coolant to a passage for cooling a heat generation member of a vehicle, the second water refrigerant heat exchanger takes in the coolant from the passage for cooling the heat generation member, and outputs the coolant to the heater core, and a refrigerant passage from the second water refrigerant heat exchanger to the first water refrigerant heat exchanger and a refrigerant passage from the condenser to the evaporator are different from each other.

In a constituent unit of a vehicle air conditioning apparatus according to an aspect of the present invention, a first water refrigerant heat exchanger, a second water refrigerant heat exchanger, and a switching section are integrated together, in which the first water refrigerant heat exchanger causes heat exchange between refrigerant in a low-temperature and low-pressure state and coolant for heat conveyance to vaporize the refrigerant; the second water refrigerant heat exchanger causes heat exchange between the refrigerant in a high-temperature and high-pressure state and the coolant to condense the refrigerant; the switching section is capable of switching between a state where the refrigerant flows through a refrigerant circuit including the second water refrigerant heat exchanger, a compressor that compresses the refrigerant, and the first water refrigerant heat exchanger, and a state where the refrigerant flows through another refrigerant circuit including the compressor.

### Advantageous Effects of Invention

According to the present invention, heating performance can be improved by sharing a compressor and refrigerant between the cooling operation and the heating operation while basically using configurations of a hot water heater and a heat pump cooling apparatus which are employed in conventional vehicles.

### Brief Description of Drawings

FIG. 1 illustrates a configuration of a vehicle air conditioning apparatus of an embodiment of the present invention;
FIG. 2 is a block diagram illustrating a configuration for controlling the vehicle air conditioning apparatus of the embodiment of the present invention;
FIG. 3 is an explanatory view of an operation in a heat-pump heating mode;
FIG. 4 is an explanatory view of an operation in a cooling mode; and
FIG. 5 illustrates a configuration of a modification of the vehicle air conditioning apparatus of the embodiment of the present invention.

### Description of Embodiments

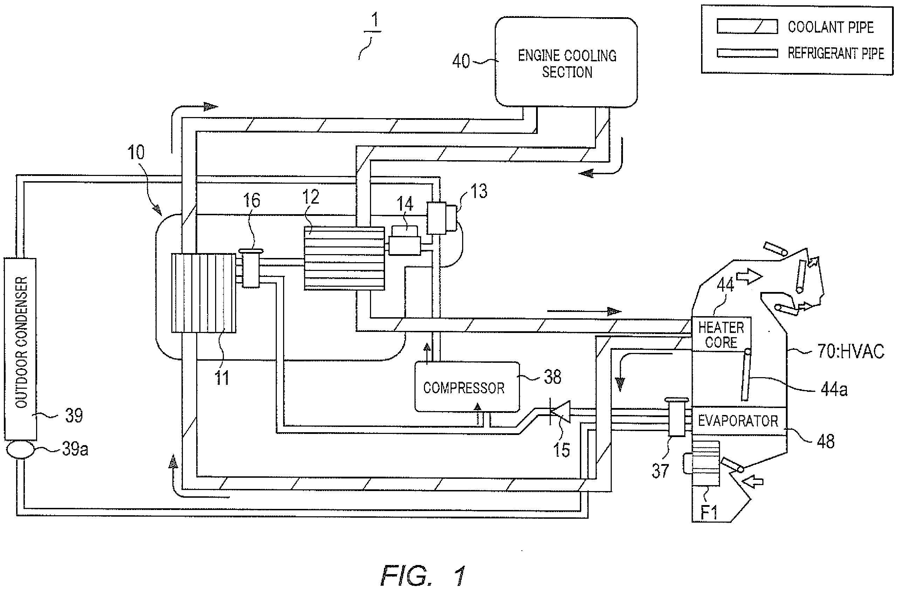

FIG. 1 illustrates a configuration of a vehicle air conditioning apparatus of an embodiment of the present invention.

Vehicle air conditioning apparatus 1 of the embodiment of the present invention is mounted in a vehicle provided with an engine (internal combustion engine) as a heat generation member, and is configured to condition the air of the vehicle interior.

Vehicle air conditioning apparatus 1 according to the embodiment includes constituent unit 10, compressor (compressing device) 38, engine cooling section 40, heater core 44, evaporator 48, expansion valve 37, outdoor condenser 39, check valve 15, a coolant pipe and a refrigerant pipe that connect the above-mentioned components, and the like. Heater core 44 and evaporator 48 are disposed in a suction passage of HVAC (heating, ventilation, and air conditioning) 70. HVAC 70 is provided with fan F1 that causes sucked air to flow.

Compressor 38 is driven with engine power or electricity. Compressor 38 compresses the sucked refrigerant into a high-temperature and high-pressure state and discharges the sucked refrigerant. The refrigerant in a high-temperature and high-pressure state is sent to second water refrigerant heat exchanger 12 or outdoor condenser 39. Refrigerant in a low-pressure state is sucked to compressor 38 from first water refrigerant heat exchanger 11 of constituent unit 10, or evaporator 48 through a joining pipe.

Engine cooling section 40 includes a water jacket that allows the coolant to flow around the engine and a pump for providing the coolant to the water jacket. Engine cooling section 40 releases heat from the engine to the coolant flowing through the water jacket. The pump rotates with the power of the engine, for example. Engine cooling section 40 may be provided with a radiator that releases the heat to the outside air when a large amount of the exhaust heat of the engine is generated. The passage of the coolant of engine cooling section 40 is in communication with heater core 44 through constituent unit 10.

The coolant is liquid for conveying heat, and is antifreeze liquid such as long life coolant (LLC), for example.

The structure for conveying the coolant may be composed only of the pump of engine cooling section 40. With such a structure, the cost of the apparatus and the installation space in the apparatus can be reduced. Pumps may be added at other places of the coolant pipe for the purpose of enhancing the ability to convey the coolant.

Heater core 44 is a device that performs heat exchange between the coolant and air, and is disposed in the suction passage of HVAC 70 that supplies air to the vehicle interior. Heated coolant is supplied to heater core 44, and the heat is released to the sucked air (the air that is sent to the vehicle interior) that is sent to the vehicle interior during heating operation. Heater core 44 can adjust the amount of the air passing therethrough on the basis of opening of door 44a. Opening and closing of door 44a can be electrically controlled. Door 44a is also referred to as "mix door."

Evaporator 48 is a device that performs heat exchange between the refrigerant in a low-temperature and low-pressure state and air, and disposed in the suction passage of HVAC 70. During cooling operation, dehumidification operation, or temperature control operation, the refrigerant in a low-temperature and low-pressure state flows through evaporator 48 to cool the sucked air that is supplied to the vehicle interior (the air that is sent to the vehicle interior).

Expansion valve 37 expands the refrigerant in a high-pressure state into a low-temperature and low-pressure state, and discharges the refrigerant to evaporator 48. Expansion valve 37 is disposed at a position near evaporator 48. Expansion valve 37 may be a thermal expansion valve (TXV) that has a function of automatically adjusting the amount of the refrigerant to be discharged on the basis of the temperature of the refrigerant to be output from evaporator 48.

Outdoor condenser 39 includes a passage through which the refrigerant flows and a passage through which air flows. Outdoor condenser 39 is disposed in the proximity of the head of the vehicle in the engine room, and performs heat exchange between the refrigerant and the outside air, for example. In a cooling mode and a dehumidification mode, the refrigerant in a high-temperature and high-pressure state is caused to flow through outdoor condenser 39 to discharge the heat from the refrigerant to the outside air. Outside air is jetted to outdoor condenser 39 with a fan, for example. Reservoir tank 39a may be provided on the refrigerant outputting side of outdoor condenser 39.

Constituent unit 10 is an integrated structure that is individually produced in a factory, and is connected to other components of vehicle air conditioning apparatus 1 through pipes in a process of assembling the vehicle. Constituent unit 10 may be integrated in the state where each component is housed in one housing, or may be integrated by joining the components together.

Constituent unit 10 includes first water refrigerant heat exchanger 11, second water refrigerant heat exchanger 12, first opening/closing valve 13, second opening/closing valve 14, and expansion valve 16.

First water refrigerant heat exchanger 11 (evaporator) includes a passage through which refrigerant in a low-temperature and low-pressure state flows, and a passage through which coolant flows. First water refrigerant heat exchanger 11 performs heat exchange between the refrigerant and the coolant. In a predetermined operation mode, refrigerant in a low-temperature and low-pressure state is taken in from expansion valve 16 to first water refrigerant heat exchanger 11 to transfer heat from the coolant to the refrigerant in a low-temperature and low-pressure state. In this manner, first water refrigerant heat exchanger 11 vaporizes the refrigerant in a low-temperature and low-pressure state.

The inlet of the coolant of first water refrigerant heat exchanger 11 is in communication with heater core 44 through a pipe, and the outlet of the coolant of first water refrigerant heat exchanger 11 is in communication with engine cooling section 40 through a pipe. The inlet of the refrigerant of first water refrigerant heat exchanger 11 is in communication with expansion valve 16 through a pipe, and the outlet of the refrigerant of first water refrigerant heat exchanger 11 is in communication with a pipe that joins to the suction port of compressor 38.

Second water refrigerant heat exchanger 12 (condenser) includes a passage through which refrigerant in a high-temperature and high-pressure state flows and a passage through which coolant flows, and performs heat exchange between the refrigerant and the coolant. In a predetermined operation mode, refrigerant in a high-temperature and high-pressure state is sent to second water refrigerant heat exchanger 12 from compressor 38 to release the heat to the coolant from the refrigerant in a high-temperature and high-pressure state. In this manner, second water refrigerant heat exchanger 12 condenses the refrigerant in a high-temperature and high-pressure state.

The inlet of the coolant of second water refrigerant heat exchanger 12 is in communication with engine cooling section 40 through a pipe, and the outlet of the coolant second water refrigerant heat exchanger 12 is in communication with heater core 44 through a pipe. The inlet of the refrigerant of second water refrigerant heat exchanger 12 is in communication with the discharge port of compressor 38 through a pipe, and the outlet of the refrigerant of second water refrigerant heat exchanger 12 is in communication with expansion valve 16.

First opening/closing valve 13 and second opening/closing valve 14 are valves that switches between the opening and the closing of the refrigerant pipe under electrical control, for example. First opening/closing valve 13 and second opening/closing valve 14 may be solenoid valves, for example. First opening/closing valve 13 opens and closes the refrigerant passage between a branching part of the refrigerant passage on the discharge side of compressor 38, and the inlet of the refrigerant of outdoor condenser 39. Second opening/closing valve 14 opens and closes the refrigerant passage between the branching part and 12 the inlet of the refrigerant of second water refrigerant heat exchanger.

Expansion valve 16 expands refrigerant in a high-pressure state into a low-temperature and low-pressure state, and discharges the refrigerant to first water refrigerant heat exchanger 11. Expansion valve 16 may be a thermal expansion valve (TXV) having a function of automatically adjusting the amount of the refrigerant to be discharged on the basis of the temperature of the refrigerant to be output from first water refrigerant heat exchanger 11.

Check valve 15 is a valve provided between compressor 38 and evaporator 48, and configured to prevent back flow of the refrigerant in an operation mode in which refrigerant does not flow through outdoor condenser 39 or evaporator 48. Here, an operation mode is examined in which first opening/closing valve 13 is closed, and refrigerant flows through a refrigerant circuit that passes through first water refrigerant heat exchanger 11 and second water refrigerant heat exchanger 12. In this operation mode, first opening/closing valve 13 is closed, and thus the refrigerant circuit that passes through outdoor condenser 39 and evaporator 48 is blocked. Also in this case, however, when the outside air is low, the refrigerant pressure in outdoor condenser 39 and evaporator 48 may be dropped. When the pressure is dropped, the refrigerant flowing through the refrigerant circuit of first water refrigerant heat exchanger 11 and second water refrigerant heat exchanger 12 flows back to the refrigerant circuit on evaporator 48 side. As a result, the amount of the refrigerant in the refrigerant circuit that passes through first water refrigerant heat exchanger 11 and second water refrigerant heat exchanger 12 falls outside an optimum range, and the heat pump cycle efficiency is reduced. However, such a situation can be avoided by providing check valve 15.

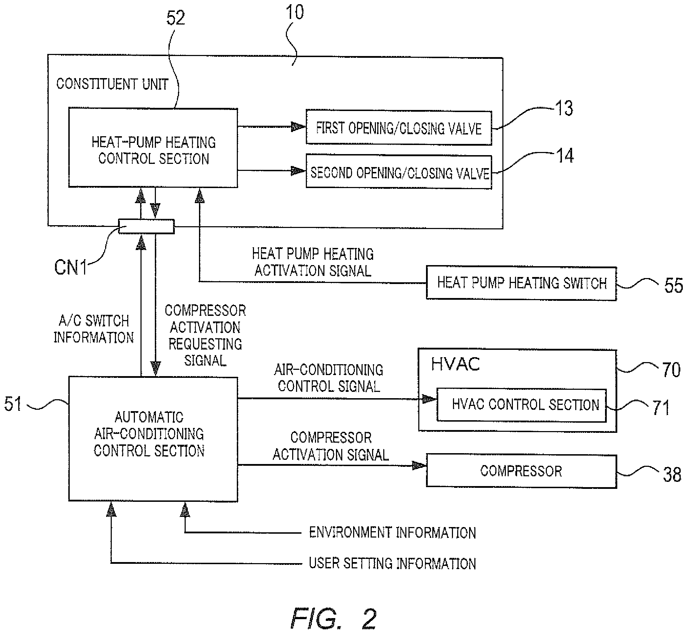

FIG. 2 is a block diagram illustrating a configuration for controlling the vehicle air conditioning apparatus of the embodiment of the present invention.

As the configuration of the control system, vehicle air conditioning apparatus 1 includes automatic air-conditioning control section 51 (which corresponds to the first air-conditioning control section), HVAC control section 71, heat-pump heating control section (which corresponds to the second air-conditioning control section) 52, and heat pump heating switch 55.

Automatic air-conditioning control section 51 includes a microcomputer, an I/O, a program memory storing a control program, a work memory and the like, in which the microcomputer automatically controls the air conditioning in accordance with the control program.

User setting information and environment information are input to automatic air-conditioning control section 51.

The user setting information is information on air-conditioning set by the user through an operation section of an instrument panel for example. The user setting information includes A/C switch information, temperature setting information, air-blow setting information and the like which are mainly intended to request the operation of the heat pump for cooling or dehumidification.

The environment information is information that is obtained from various sensors provided in the vehicle or vehicle air conditioning apparatus 1. Environment information includes outside-air temperature information, vehicle-interior temperature information, discharging pressure information of compressor 38, opening information of door 44a and the like, for example.

Automatic air-conditioning control section 51 performs the activation control of compressor 38. When compressor 38 is configured to be driven with engine power, the activation control of compressor 38 is carried out by outputting a compressor activation signal for switching the state of the clutch that transmits engine power. In addition, when compressor 38 is of an electric type, compressor 38 is driven and controlled by outputting a compressor activation signal for turning on or off the supply of drive power.

In addition, automatic air-conditioning control section 51 sends a command (an air-conditioning control signal for door control or the like) to HVAC control section 71 to perform controls such as opening/closing of door 44a of heater core 44, opening/closing of doors of HVAC 70, and driving of fan F1. HVAC control section 71 is configured to generally control driving sections of HVAC 70 on the basis of the command from automatic air-conditioning control section 51.

Further, automatic air-conditioning control section 51 includes a communication section capable of exchanging predetermined information with heat-pump heating control section 52. The communication section may be a communication section that are used through a serial bus, a controller area network (CAN), or a dedicated signal line. When an existing communication section such as a CAN communication and a serial bus communication are adopted, a conventional air-conditioning control unit can be utilized as automatic air-conditioning control section 51 by slightly changing only the control program. Alternatively, by adopting a communication section using a spare input-output port, a conventional air-conditioning control unit can be utilized as automatic air-conditioning control section 51 by slightly changing only the control program.

Heat-pump heating control section 52 may be composed of a microcomputer or a sequencer. Heat-pump heating control section 52 controls the opening and closing of first opening/closing valve 13 and second opening/closing valve 14, and mainly, performs switching control of a heat-pump heating mode.

Heat-pump heating control section 52 is housed in a control box integrated with constituent unit 10. It is to be noted that the control box may be separated from a structure of a mechanical system of constituent unit 10.

Information for determining the necessity of the heat-pump heating mode is input to heat-pump heating control section 52. To be more specific, this information is switch information (heat pump heating activation signal) representing the on-off of heat pump heating switch 55. Heat pump heating switch 55 is a switch that can be operated by the user. When the user turns on heat pump heating switch 55 to input the heat pump heating activation signal, heat-pump heating control section 52 can determine that transition to the heat-pump heating mode is required.

Environment information such as outside-air temperature information, vehicle-interior temperature information, and coolant temperature information; setting information of the vehicle interior temperature; and the like may be input to heat-pump heating control section 52 as the information for determining the necessity of the heat-pump heating mode. In addition, the information for determining the necessity of the heat-pump heating mode may include information on the state of vehicle air conditioning apparatus 1 such as opening information of door 44a. All of the above-mentioned information may not be input, and only pieces of information selected from the above-mentioned information may be input. On the basis of the pieces of information, heat-pump heating control section 52 can determine that the heat of the engine exhaust heat and the like is insufficient for heating, and that transition to the heat-pump heating mode is required.

Heat-pump heating control section 52 includes a communication section capable of exchanging predetermined information with automatic air-conditioning control section 51. A communication line is connected with heat-pump heating control section 52 through connector CN1 (which corresponds to the connecting section) while the communication line is not limited to this.

Through the communication between heat-pump heating control section 52 and automatic air-conditioning control section 51, at least A/C switch information (which corresponds to the air-conditioning switch information) is sent from automatic air-conditioning control section 51 to heat-pump heating control section 52, and a compressor activation requesting signal is transmitted from heat-pump heating control section 52 to automatic air-conditioning control section 51.

The A/C (air conditioner) switch information is on-off information of an A/C switch provided on the operation section of the instrument panel, for example. The A/C (air conditioner) switch is an operation switch that is operated by the user to request activation of compressor 38 mainly for the purpose of cooling or dehumidification.

The compressor activation requesting signal is a signal for requesting activation of compressor 38, and with this signal, compressor 38 can be activated from heat-pump heating control section 52 even when the A/C switch is in an off state.

When it is determined that transition to the heat-pump heating mode is required, heat-pump heating control section 52 determines whether compressor 38 is being driven on the basis of information from automatic air-conditioning control section 51. When it is determined that compressor 38 is not being driven, heat-pump heating control section 52 sends the compressor activation requesting signal to automatic air-conditioning control section 51. Even when the A/C switch is in an off state, automatic air-conditioning control section 51 drives compressor 38 with the compressor activation requesting signal. Further, heat-pump heating control section 52 controls opening and closing of first opening/closing valve 13 and second opening/closing valve 14, and performs control for transition to the heat-pump heating mode.

It is to be noted that the information exchanged between automatic air-conditioning control section 51 and heat-pump heating control section 52 may include information representing the current operation mode of the vehicle air conditioning apparatus, the opening information of the doors of HVAC 70 and the like.

Next, the operation of vehicle air conditioning apparatus 1 will be described.

During operation, vehicle air conditioning apparatus 1 is switched among multiple operation modes such as a hot water heating mode, a heat-pump heating mode, a temperature control mode, and a cooling mode. The hot water heating mode is a mode for heating the vehicle interior without operating the heat pump. The heat-pump heating mode is a mode for heating the vehicle interior by operating the heat pump. The cooling mode is a mode for cooling the vehicle interior with the action of the heat pump. The temperature control mode is a mode for adjusting the humidity and the temperature of air by appropriately combining dehumidification and cooling of air by refrigerant having a low temperature, and heating of air by coolant having a high temperature. In the following, the heat-pump heating mode and the cooling mode are described as typical examples.

### [Heat-pump heating mode]

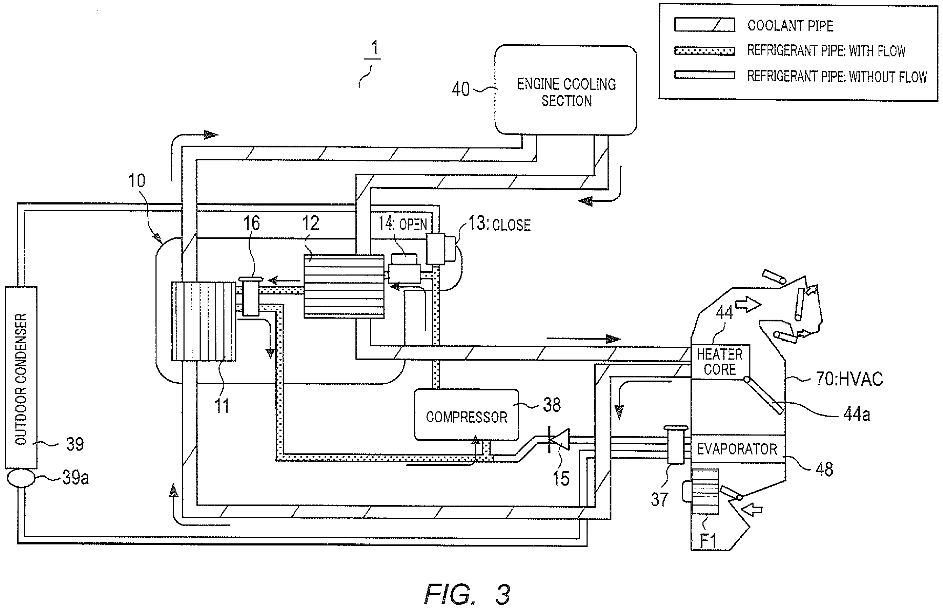

FIG. 3 is an explanatory view of an operation in the heat-pump heating mode.

In the heat-pump heating mode, first opening/closing valve 13 is closed, and second opening/closing valve 14 is opened as illustrated in FIG. 3. In addition, door 44a of heater core 44 is opened (for example, fully opened).

Further, in the heat-pump heating mode, compressor 38 is operated such that the refrigerant cyclically flows through second water refrigerant heat exchanger 12, expansion valve 16, first water refrigerant heat exchanger 11, and, compressor 38, in this order.

The refrigerant in a high-temperature and high-pressure state compressed by compressor 38 is subjected to heat release to the coolant at second water refrigerant heat exchanger 12 and condensed. The condensed refrigerant is expanded by expansion valve 16 and changed into a low-temperature and low-pressure state, and then, sent to first water refrigerant heat exchanger 11. The refrigerant in a low-temperature and low-pressure state absorbs heat from the coolant at first water refrigerant heat exchanger 11 and vaporizes. The vaporized refrigerant in a low-pressure state is absorbed by compressor 38 and compressed.

The coolant cyclically flows through engine cooling section 40, second water refrigerant heat exchanger 12, heater core 44, and first water refrigerant heat exchanger 11 in this order.

Here, the coolant having absorbed the heat from the engine at engine cooling section 40 is further heated at second water refrigerant heat exchanger 12 and sent to heater core 44. At heater core 44, the coolant thus heated to a high temperature can sufficiently heat the sucked air that is sent to the vehicle interior.

The coolant having passed through heater core 44 has a temperature higher than that of the outside air, and can vaporize the refrigerant by releasing the heat to the refrigerant at first water refrigerant heat exchanger 11. The coolant cooled at first water refrigerant heat exchanger 11 is sent to engine cooling section 40 and thus can sufficiently cool the engine.

Through the above-mentioned operation, the vehicle interior can be sufficiently heated.

### [Cooling mode]

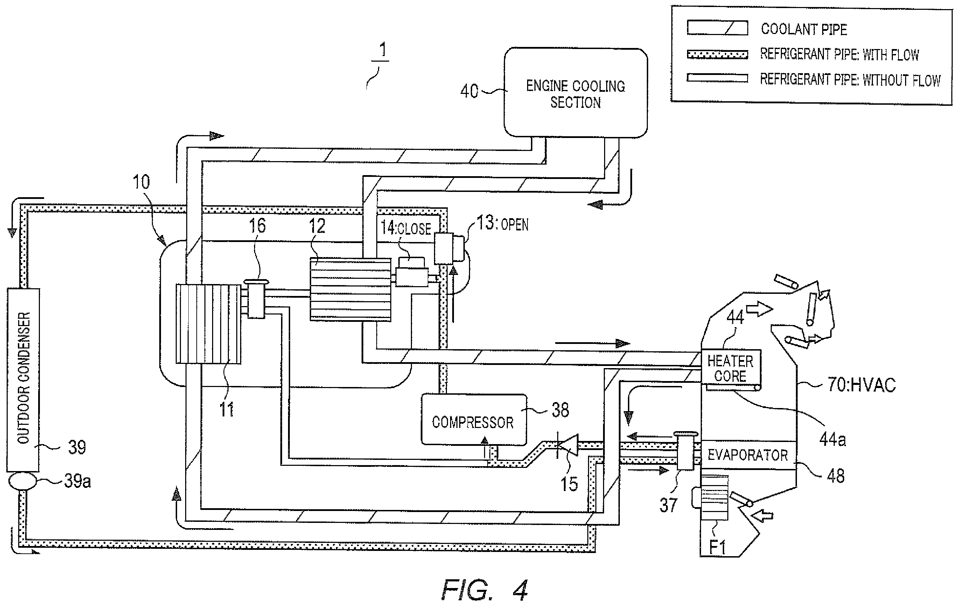

FIG. 4 is an explanatory view of an operation in the cooling mode.

In the cooling mode, first opening/closing valve 13 is opened, and second opening/closing valve 14 is closed as illustrated in FIG. 4. In addition, door 44a of heater core 44 is fully closed.

Further, in the cooling mode, compressor 38 is operated such that the refrigerant cyclically flows through outdoor condenser 39, expansion valve 37, evaporator 48, and compressor 38 in this order.

The refrigerant in a high-temperature and high-pressure state compressed by compressor 38 is subjected to heat release to the air at outdoor condenser 39 and condensed. The condensed refrigerant is expanded by expansion valve 37 and changed into a low-temperature and low-pressure state, and then sent to evaporator 48. The refrigerant in a low-temperature and low-pressure state cools the sucked air that is sent to the vehicle interior at evaporator 48 and vaporizes. The vaporized refrigerant in a low-pressure state is absorbed by compressor 38 and compressed.

The coolant flows through engine cooling section 40, second water refrigerant heat exchanger 12, heater core 44, and first water refrigerant heat exchanger 11. When the coolant passes through first water refrigerant heat exchanger 11, second water refrigerant heat exchanger 12, and heater core 44, almost no heat exchange is caused between the refrigerant and the air. The heat releasing of the coolant is mainly caused at the radiator of engine cooling section 40. Since the temperature of the engine is increased to an extremely high temperature, cooling can be appropriately performed through the heat releasing by the radiator even when the outside air temperature is high. As the configuration for the flow of the coolant, a relatively large amount of coolant may be provided to the radiator side so as to reduce the flow on the heater core 44 side.

Through the above-mentioned operation, the vehicle interior can be sufficiently cooled.

As described above, vehicle air conditioning apparatus 1 according to the present embodiment has, as its basic configuration, a configuration of a hot water heater in which engine coolant is caused to flow through heater core 44 and utilized for heating, and a configuration of a heat pump cooling apparatus in which refrigerant in a low-temperature and low-pressure state of a heat pump is utilized to perform cooling. Constituent unit 10 is added to the basic configuration, and thus vehicle air conditioning apparatus 1 according to the present embodiment has a configuration which can heat the vehicle interior with use of the heat pump. With this configuration, the vehicle interior can be speedily heated with the action of the heat pump with low energy even when the engine has a low temperature.

That is, according to vehicle air conditioning apparatus 1 according to the present embodiment, heating performance can be improved by sharing a compressor and refrigerant between the cooling operation and the heating operation while basically using a configuration of a hot water heater and a heat pump cooling apparatus which are employed in conventional vehicles.

In addition, when a heat pump heating function is additionally adopted while basically using a vehicle air conditioning apparatus which is employed in conventional vehicles, the whole configuration of the air-conditioner control system is required to be changed if no design change is made. However, in vehicle air conditioning apparatus 1 according to the present embodiment, automatic air-conditioning control section 51 that controls HVAC 70 and compressor 38, and heat-pump heating control section 52 that controls the operation section (first opening/closing valve 13 and second opening/closing valve 14) of constituent unit 10 are separately provided from each other. In addition, automatic air-conditioning control section 51 and heat-pump heating control section 52 are communicably connected with each other. With this configuration, it is possible to switch the operation mode of vehicle air conditioning apparatus 1 to the heat-pump heating mode, and to control the operation of the heat-pump heating mode through additional control of heat-pump heating control section 52 of constituent unit 10 while basically using a configuration of a control system of a heat pump cooling apparatus which is employed in conventional vehicles.

In addition, according to vehicle air conditioning apparatus 1 according to the present embodiment, since the refrigerant passage from second water refrigerant heat exchanger 12 to first water refrigerant heat exchanger 11, and the refrigerant passage from outdoor condenser 39 to evaporator 48 are different from each other, the refrigerant passages can be tuned differently among multiple operation modes so as to be fitted to the multiple operation modes (for example, the cooling mode and the heating mode). In addition, according to vehicle air conditioning apparatus 1 according to the present embodiment, since vehicle air conditioning apparatus 1 includes expansion valve 16 that expands the refrigerant at a preceding point of first water refrigerant heat exchanger 11, and expansion valve 37 that expands the refrigerant at a preceding point of evaporator 48, the expansion valves can be tuned differently among multiple operation modes so as to be fitted to the multiple operation modes. In the present embodiment, the heat exchange between the air and the refrigerant is caused in the cooling mode and the heat exchange between the coolant and the refrigerant is caused in the heating mode, and, since tuning fitted to multiple operation modes is allowed, the operational performance specified to each operation mode can be ensured. In addition, the operation modes can be smoothly switched. When the refrigerant passage from second water refrigerant heat exchanger 12 to first water refrigerant heat exchanger 11 and the refrigerant passage from outdoor condenser 39 to evaporator 48 are partly shared, the refrigerant may disadvantageously stay at outdoor condenser 39 at the time of switching to the operation mode, thus reducing the ease of collection and unstabilizing the amount of the refrigerant. However, such a problem is not caused in vehicle air conditioning apparatus 1 according to the present embodiment.

Hereinabove, the embodiment of the present invention has been described.

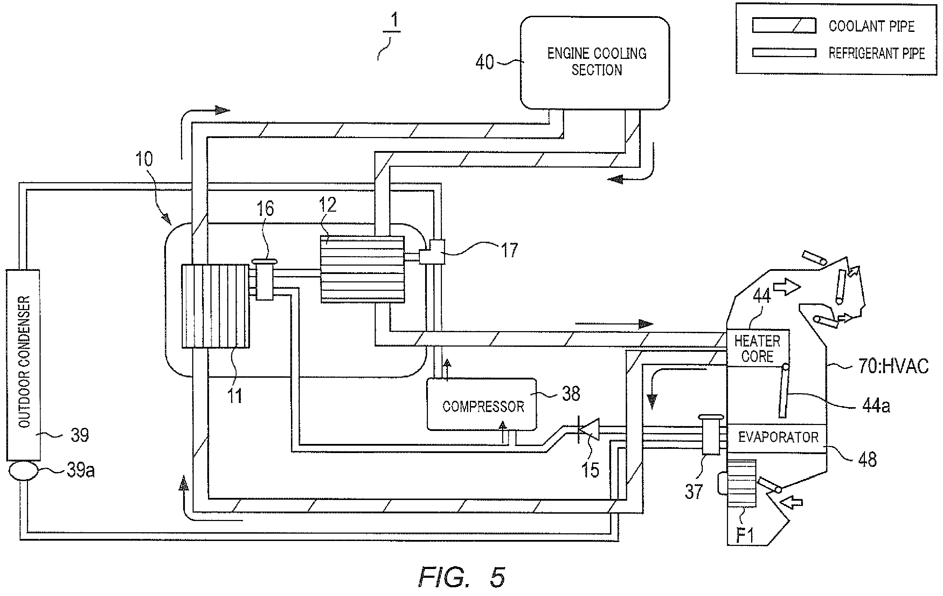

It is to be noted that an exemplary configuration where first opening/closing valve 13 and second opening/closing valve 14 are used as switching sections for switching the flow of the refrigerant is described in the above-mentioned embodiment. Alternatively, the switching section may be composed of three-way valve 17 illustrated in FIG. 5.

FIG. 5 illustrates a configuration of a modification of the vehicle air conditioning apparatus of the embodiment of the present invention.

Three-way valve 17 is disposed at a part where the refrigerant passage from the discharge port of compressor 38 is diverged to the refrigerant introduction side of second water refrigerant heat exchanger 12 and the refrigerant introduction side of outdoor condenser 39. Three-way valve 17 is a valve capable of switching the flow of the refrigerant taken from the discharge port of compressor 38 between one side and the other side under electrical control.

Three-way valve 17 may be included in constituent unit 10 and integrated with other components of constituent unit 10.

While an exemplary configuration where first opening/closing valve 13 and second opening/closing valve 14 are included in constituent unit 10 is described in the above-mentioned embodiment, first opening/closing valve 13 or second opening/closing valve 14 or both may be separately provided outside constituent unit 10.

While an exemplary configuration where various signals and information are input to automatic air-conditioning control section 51 and heat-pump heating control section 52 is described in the above-mentioned embodiment, the signal and information may be appropriately omitted or changed within the scope of the present invention.

While an exemplary configuration where automatic air-conditioning control section 51 and heat-pump heating control section 52 are provided separately from each other and are communicably connected with each other is described in the above-mentioned embodiment, it is possible to adopt a configuration in which the function of heat-pump heating control section 52 is added to automatic air-conditioning control section 51 and heat-pump heating control section 52 is omitted. That is, it is possible to adopt a configuration in which the activation control of compressor 38 and the switching control of first opening/closing valve 13 and second opening/closing valve 14 are performed by one air-conditioning control section.

While an exemplary configuration where the heating member of the vehicle is the engine is described in the above-mentioned embodiment, various heating members such as an electric motor for traveling and a secondary battery for supplying power for travelling in an electric vehicle may be employed as the heating member of the vehicle.

The disclosure of the specification, drawings, and abstract in Japanese Patent Application No. 2013-155021 filed on July 25, 2013 is incorporated herein by reference in its entirety.

### Industrial Applicability

The present invention is applicable to a vehicle air conditioning apparatus that is mounted in various kinds of vehicles such as engine vehicles, electric vehicles and HEV vehicles.

### Reference Signs List

- 1: Vehicle air conditioning apparatus
- 10: Constituent unit
- 11: First water refrigerant heat exchanger
- 12: Second water refrigerant heat exchanger
- 13: First opening/closing valve (switching section)
- 14: Second opening/closing valve (switching section)
- 15: Check valve
- 16, 37: Expansion valve
- 17: Three-way valve
- 37: Expansion valve
- 38: Compressor
- 39: Outdoor condenser
- 40: Engine cooling section
- 44: Heater core
- 44a: Door
- 48: Evaporator
- 51: Air-conditioning automatic control section
- 52: Heat-pump heating control section
- 55: Heat pump heating switch
- 70: HVAC
- 71: HVAC control section
- CN1: Connector

## Claims

1. A vehicle air conditioning apparatus comprising:
a first water refrigerant heat exchanger that causes heat exchange between refrigerant in a low-temperature and low-pressure state and coolant for heat conveyance to vaporize the refrigerant;
a second water refrigerant heat exchanger that causes heat exchange between the refrigerant in a high-temperature and high-pressure state and the coolant to condense the refrigerant;
a compressor that compresses the refrigerant;
an evaporator that causes heat exchange between the refrigerant in a low-temperature and low-pressure state and sucked air that is sent to a vehicle interior;
a condenser that causes heat release from the refrigerant in a high-temperature and high-pressure state to condense the refrigerant; and
a switching section capable of switching between a state where the refrigerant flows through a refrigerant circuit including the second water refrigerant heat exchanger, the compressor, and the first water refrigerant heat exchanger, and a state where the refrigerant flows through a refrigerant circuit including the evaporator, the compressor, and the condenser, wherein
the first water refrigerant heat exchanger takes in the coolant from a heater core that heats air that is sent to the vehicle interior, and outputs the coolant to a passage for cooling a heat generation member of a vehicle,
the second water refrigerant heat exchanger takes in the coolant from the passage for cooling the heat generation member, and outputs the coolant to the heater core, and
a refrigerant passage from the second water refrigerant heat exchanger to the first water refrigerant heat exchanger and a refrigerant passage from the condenser to the evaporator are different from each other.

2. The vehicle air conditioning apparatus according to claim 1 further comprising a check valve disposed on a passage through which the refrigerant flows from the evaporator to the compressor.

3. The vehicle air conditioning apparatus according to claim 1 or 2 further comprising:
a first expansion section that expands the refrigerant condensed by the condenser into a low-temperature and low-pressure state, and discharges the refrigerant to the evaporator; and
a second expansion section that expands the condensed refrigerant into a low-temperature and low-pressure state, and discharges the refrigerant to the first water refrigerant heat exchanger.

4. The vehicle air conditioning apparatus according to claim 1 further comprising:
a first air-conditioning control section that controls an operation of the compressor; and
a second air-conditioning control section that controls switching of the switching section, wherein
the first air-conditioning control section and the second air-conditioning control section are communicably connected with each other.

5. The vehicle air conditioning apparatus according to claim 2, wherein:
the first air-conditioning control section is capable of transmitting air-conditioning switch information to the second air-conditioning control section, the air-conditioning switch information representing on-off of an air-conditioning switch that is operated by a user; and
the second air-conditioning control section is capable of transmitting a compressor activation request to the first air-conditioning control section.

6. The vehicle air conditioning apparatus according to any one of claims 1 to 5, wherein:
a refrigerant passage from a discharge port of the compressor includes a branching part that diverges to a side of the condenser on which the refrigerant is taken in and to a side of the second water refrigerant heat exchanger on which the refrigerant is taken in; and
the switching section includes
a first opening/closing valve capable of blocking a refrigerant passage between the branching part and the second water refrigerant heat exchanger, and
a second opening/closing valve capable of blocking a refrigerant passage between the branching part and the condenser.

7. The vehicle air conditioning apparatus according to any one of claims 1 to 5, wherein the switching section includes a three-way valve disposed at a branching part where a refrigerant passage from a discharge port of the compressor diverges to a side of the condenser on which the refrigerant is taken in and to a side of the second water refrigerant heat exchanger on which the refrigerant is taken in.

8. The vehicle air conditioning apparatus according to claim 4 or 5, wherein the second air-conditioning control section receives information for determining necessity of a heat-pump heating mode, and transmits a compressor activation request to the first air-conditioning control section on a basis of the received information.

9. The vehicle air conditioning apparatus according to claim 8, wherein the information for determining the necessity of the heat-pump heating mode includes switch information of a heat pump heating switch that is operated by the user.

10. The vehicle air conditioning apparatus according to any one of claims 1 to 9, wherein the heat generation member is an internal combustion engine.

11. The vehicle air conditioning apparatus according to any one of claims 1 to 10, wherein:
the first water refrigerant heat exchanger, the second water refrigerant heat exchanger, and the switching section are integrated together to compose a unit; and
the compressor is provided outside the unit.

12. The vehicle air conditioning apparatus according to any one of claims 4, 5, 8 and 9, wherein:
the first water refrigerant heat exchanger, the second water refrigerant heat exchanger, the switching section, and the second air-conditioning control section are integrated together to compose a unit; and
the compressor and the first air-conditioning control section are provided outside the unit.

13. A constituent unit of a vehicle air conditioning apparatus, wherein a first water refrigerant heat exchanger, a second water refrigerant heat exchanger, and a switching section are integrated together, wherein
the first water refrigerant heat exchanger causes heat exchange between refrigerant in a low-temperature and low-pressure state and coolant for heat conveyance to vaporize the refrigerant;
the second water refrigerant heat exchanger causes heat exchange between the refrigerant in a high-temperature and high-pressure state and the coolant to condense the refrigerant; and
the switching section is capable of switching between a state where the refrigerant flows through a refrigerant circuit including the second water refrigerant heat exchanger, a compressor that compresses the refrigerant, and the first water refrigerant heat exchanger, and a state where the refrigerant flows through another refrigerant circuit including the compressor.

14. The constituent unit of the vehicle air conditioning apparatus according to claim 13 further comprising:
a connecting section that is connected to a signal line for communication with a first air-conditioning control section that controls the compressor; and
a second air-conditioning control section that is communicably connected to the first air-conditioning control section through the connecting section, and controls switching of the switching section.

15. The constituent unit of the vehicle air conditioning apparatus according to claim 14, wherein the first water refrigerant heat exchanger, the second water refrigerant heat exchanger, the switching section, and the second air-conditioning control section are integrated together.
